# EUROPEAN PATENT SPECIFICATION

(11) **EP 3 416 152 B1**
(45) Date of publication and mention of the grant of the patent: **03.04.2024**
(21) Application number: 18176646.0
(22) Date of filing: 07.06.2018
(51) Int. Cl.: G08G 1/0962, B60K 28/02, G08B 21/06

(54) **DRIVER FATIGUE WARNING SYSTEM**
FAHRERMÜDIGKEITSWARNSYSTEM
SYSTÈME D'AVERTISSEMENT DE FATIGUE DE CONDUCTEUR

(30) Priority: 14.06.2017 US 201715622277
(43) Date of publication of application: 19.12.2018
(73) Proprietor: Aptiv Technologies Limited, St. Michael (BB)
(72) Inventor: KRISHNA PRASAD, Premchand, WESTFIELD, INDIANA 46074 (US)
(74) Representative: Manitz Finsterwald Patent- und Rechtsanwaltspartnerschaft mbB

(56) References cited:
- DE-A1-102012 001 741
- DE-A1-102012 100 698
- US-A1- 2017 001 522

## Description

### TECHNICAL FIELD OF INVENTION

This disclosure generally relates to a driver-fatigue warning system, and more particularly relates to a driver-fatigue warning system that does not penalize a driver for responding to a speed-limit change.

### BACKGROUND OF INVENTION

It is known to detect a driver's level of fatigue by tracking a speed-change of a vehicle. Excessive occurrences of speed-change may indicate an unsafe level of driver-fatigue and may lead to an activation of an alert-device that alerts the driver to their lowered level of responsiveness.

DE 10 2012 001741 A1 discloses a device with a driver assistance system to assist a vehicle rider, while operating a vehicle. A monitoring system is adapted to set an indicator whose value indicates the ability of the vehicle rider to operate the vehicle due to tiredness of the rider, based on a frequency of occurrence of an assistant action of the driver assistance system.

US 2017/001522 A1 discloses that in a display control device, in accordance with speed limit information input from an input unit, a control unit senses change in a speed limit of a road where a vehicle travels and after that, in accordance with vehicle information input from the input unit, determines whether or not there is necessity to increase conspicuity of notification of the change in the speed limit. When it is determined that the necessity is high, a display unit is caused to switch display on a display medium from a first presentation image to a second presentation image that indicates a second speed limit by a first switching method. When it is determined that the necessity is not high, the display of the first presentation image is switched to the display of the second presentation image by a second switching method different from the first switching method.

### SUMMARY OF THE INVENTION

The invention is defined by the appended claims.

In an example, a driver-fatigue warning system is provided. The driver-fatigue warning system includes a speed-limit-detection-means, a speed-sensor, an alert-device, and a controller. The speed-limit-detection-means detects a speed-limit of a roadway traveled by a host-vehicle. The speed-sensor detects a speed of the host-vehicle. The alert-device is operable to alert an operator of the host-vehicle of driver-fatigue. The controller is in communication with the speed-limit-detection-means, the speed-sensor, and the alert-device. The controller determines a change of the speed-limit of the roadway based on the speed-limit-detection-means. The controller determines that a speed-change has occurred based on the speed-sensor when a variation in the speed is greater than a variation-threshold. The controller does not increment a count of occurrences of the speed-change when the speed-change correlates with the change of the speed-limit, and activates the alert-device when the count of occurrences of the speed-change exceeds a change-threshold indicative of driver-fatigue.

The speed-limit-detection-means may include a camera that renders an image of a road-sign proximate to the roadway, and wherein the controller may further determine the change of the speed-limit of the roadway based on the image. The speed-limit-detection-means may include a digital-map that indicates the speed-limit of the roadway, and wherein the controller may further determine the change of the speed-limit of the roadway based on the digital-map. The controller may further determine when the change of the speed-limit indicates a reduction in the speed-limit, wherein the controller may not increment the count of the speed-change when the speed-change indicates the reduction in the speed of the host-vehicle, and the reduction in the speed-limit is detected. The controller may further determine the change of the speed-limit indicates an increase in the speed-limit, wherein the controller may not increment the count of the speed-change when the speed-change indicates an increase in the speed of the host-vehicle, and an increase in the speed-limit is detected. The controller may activate the alert-device when the count of the occurrences of the speed-change exceeds a change-threshold within a time period of less than thirty minutes. The variation-threshold may be less than twenty-five kilometers per hour. The variation-threshold (44) is less than ten kilometers per hour.

In one embodiment, a method of operating a driver-fatigue warning system is provided. The method includes the steps of detecting a speed-limit, detecting a speed of a host-vehicle, determining a change in the speed-limit, determining a speed-change, and activating an alert-device. The step of detecting the speed-limit may include detecting, with a speed-limit-detection-means, the speed-limit of a roadway traveled by a host-vehicle. The step of detecting the speed of the host-vehicle may include detecting, with a speed-sensor, the speed of the host-vehicle. The step of determining the change in the speed-limit may include determining, with a controller in communication with the speed-limit-detection-means, the speed-sensor, and the alert-device, a change of the speed-limit of the roadway based on the speed-limit-detection-means. The step of determining the speed-change may include determining, with the controller, that the speed-change has occurred based on the speed-sensor when a variation in the speed is greater than a variation-threshold, and not counting occurrences of the speed-change when the speed-change correlates with the change of the speed-limit. The step of activating the alert-device may include activating, with the controller, the alert-device that alerts an operator of the host-vehicle when a count of occurrences of the speed-change exceeds a change-threshold indicative of driver-fatigue.

The controller may further determine when the change of the speed-limit indicates a reduction in the speed-limit, and the controller may not count the speed-change when the speed-change indicates the reduction in the speed of the host-vehicle and the reduction in the speed-limit is detected. The controller may further determine when the change of the speed-limit indicates an increase in the speed-limit, and the controller may not count the speed-change when the speed-change indicates an increase in the speed of the host-vehicle and an increase in the speed-limit is detected. The controller may activate the alert-device when the count of occurrences of the speed-change exceeds a change-threshold within a time period of less than thirty minutes. The variation-threshold may be less than twenty-five kilometers per hour. The variation-threshold may be less than ten kilometers per hour.

In another embodiment, an automated vehicular warning system is provided. The automated vehicular warning system includes a speed-limit detector, a speed-sensor, an alert-device, and a controller in communication with the speed-limit detector, the speed-sensor, and the alert-device. The controller determines a change of a speed-limit of a roadway. The controller also determines a change of a vehicle-speed, and does not count the change of the vehicle-speed when the vehicle-speed agrees with the change of the speed-limit. The controller activates the alert-device when the count of the change of vehicle-speed exceeds a change-threshold indicative of driver-fatigue.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of a driver-fatigue warning system,
Fig. 2 is an illustration of a host-vehicle equipped with the driver-fatigue warning system of Fig. 1;
Fig. 3 is an illustration of the host-vehicle of Fig. 2;
Fig. 4 is an illustration of the host-vehicle of Fig. 2;
Fig. 5 is an illustration of a method of operating the driver-fatigue warning system of Fig. 1;
Fig. 6 is an illustration of an automated vehicular warning system,
Fig. 7 is an illustration of a host-vehicle equipped with the automated vehicular warning system of Fig. 6;
Fig. 8 is an illustration of the host-vehicle of Fig. 7;
Fig. 9 is an illustration of the host-vehicle of Fig. 7; and
Fig. 10 is a flow chart of a driver-fatigue algorithm.

### DETAILED DESCRIPTION

A typical driver-fatigue warning system detects whether an operator of a host-vehicle is drowsy or fatigued by tracking a variation in a speed of the host-vehicle. While the typical driver-fatigue warning system may accurately estimate the driver-fatigue under ideal traffic conditions, situations exist where the operator may intentionally change speed due to a change of a posted speed-limit. While these speed changes may be due to the driver observing the traffic laws, they may be erroneously counted by the typical driver-fatigue warning system as an indication of driver-fatigue, and may lead to a false driver-fatigue warning. As will be described in more detail below, the system described herein is an improvement over prior driver-fatigue warning systems because the system reduces the rates of false driver-fatigue warnings by determining when to count the speed change, which may help to reduce occurrences of operators intentionally deactivating the driver-fatigue warning system.

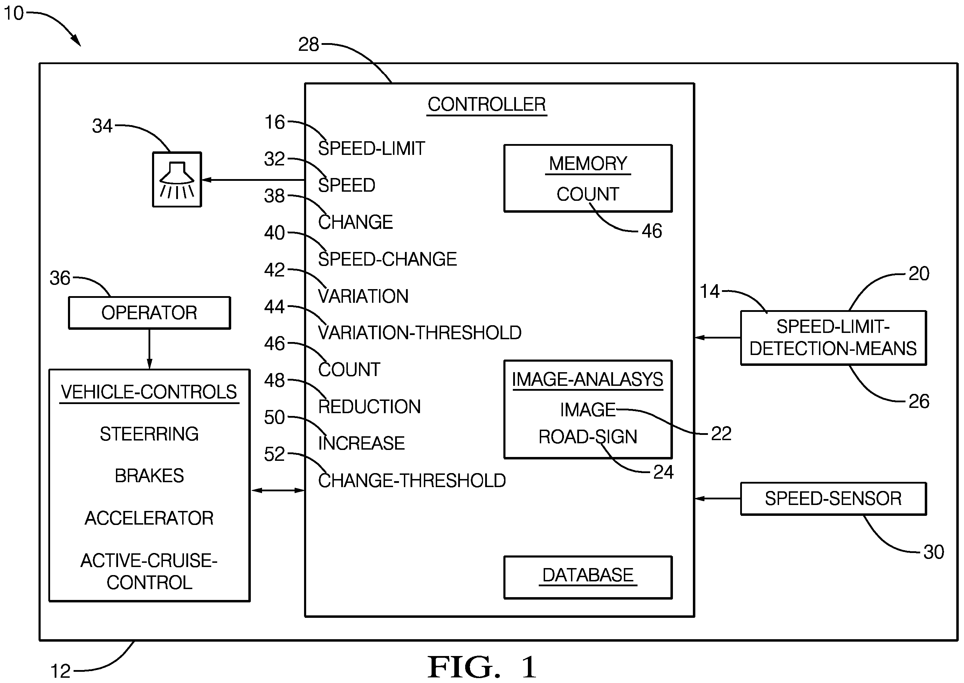

Fig. 1 illustrates a non-limiting example of a driver-fatigue warning system 10, hereafter referred to as the system 10, suitable for use on an automated vehicle 12, hereafter referred to a host-vehicle 12. The system 10 includes a speed-limit-detection-means 14 that detects a speed-limit 16 of a roadway 18 traveled by the host-vehicle 12.

The speed-limit-detection-means 14 may be a camera 20 that renders an image 22 of a road-sign 24 proximate to the roadway 18. Examples of the camera 20 suitable for use on the host-vehicle 12 are commercially available as will be recognized by those in the art, one such being the APTINA MT9V023 from Micron Technology, Inc. of Boise, Idaho, USA. The camera 20 may be mounted on the front of the host-vehicle 12, or mounted in the interior of the host-vehicle 12 at a location suitable for the camera 20 to view the area around the host-vehicle 12 through the windshield of the host-vehicle 12. The camera 20 is preferably a video-type camera 20 or camera 20 that can capture images 22 of the roadway 18 and surrounding area at a sufficient frame-rate, of ten frames per second, for example.

The speed-limit-detection-means 14 may be a digital-map 26 that indicates the speed-limit 16 of the roadway 18. The digital-map 26 may be located on-board the host-vehicle 12 and may be integrated into a controller 28. The digital-map 26 may be stored `in the cloud' and accessed via a transceiver (e.g. Wi-Fi, cellular, satellite - not shown). The digital-map 26 and transceiver may also be part of a location-device (e.g. GPS - not shown).

The system 10 also includes a speed-sensor 30 that detects a speed 32 of the host-vehicle 12. The speed-sensor 30 may include a wheel-speed-sensor (not shown) typically found on automotive applications. Other sensors capable of determining the speed 32 of the host-vehicle 12 may include, but are not limited to, a global-positioning-system (GPS) receiver (not shown), and a RADAR transceiver (not shown), and other devices as will be recognized by those skilled in the art.

The system 10 also includes an alert-device 34 operable to alert an operator 36 of the host-vehicle 12 of driver-fatigue. The alert-device 34 may be an indicator viewable by the operator 36 that is illuminated to indicate an instance of driver-fatigue, and/or an audible alarm, and/or a vibratory alarm that is activated to indicate the same.

The system 10 also includes the controller 28 in communication with the speed-limit-detection-means 14, the speed-sensor 30, and the alert-device 34. The controller 28 may include a processor (not shown) such as a microprocessor or other control circuitry such as analog and/or digital control circuitry including an application specific integrated circuit (ASIC) for processing data as should be evident to those in the art. The controller 28 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of driver-fatigue exists based on signals received by the controller 28 from the speed-limit-detection-means 14 and the speed-sensor 30, as described herein.

The controller 28 may be configured to receive the image 22 from the camera 20 and detect characters (not specifically shown) on the road-sign 24 in order to determine the speed-limit 16. The controller 28 may use known optical-character-recognition (OCR) methods to match the characters in the image 22 captured by the camera 20 with the characters in a database (not specifically shown). One skilled in the art of OCR will recognize that methods such as optical-word-recognition (OWR), intelligent-character-recognition (ICR), and intelligent-word-recognition (IWR) are all considered OCR methods and may be applied by the controller 28 to determine the speed-limit 16. The OCR methods may include pre-processing of the image 22 to improve the success rate of recognition of the characters, matrix-matching, feature extraction, and application-specific optimizations, and will be recognized by those skilled in the art of OCR.

The controller 28 may also include an internet-transceiver (not shown) that updates the digital-map 26 with speed-limit 16 information. The internet-transceiver may be any internet-transceiver suitable for automotive applications and may include Wi-Fi, cellular, and satellite devices (not shown).

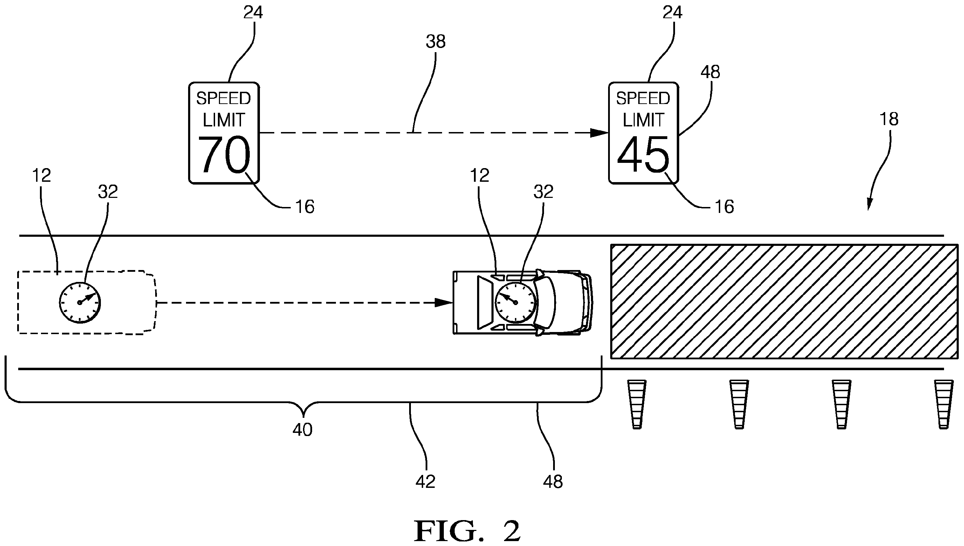

Fig. 2 illustrates a traffic scenario where the host-vehicle 12 is entering a construction-zone (not specifically shown) where the speed-limit 16 of the roadway 18 is reduced. The controller 28 determines a change 38 of the speed-limit 16 of the roadway 18 based on the speed-limit-detection-means 14 (i.e. based on the camera 20, the digital-map 26, or a combination thereof). The controller 28 also determines that a speed-change 40 has occurred based on the speed-sensor 30 when a variation 42 in the speed 32 of the host-vehicle 12 is greater than a variation-threshold 44 (Fig. 1).

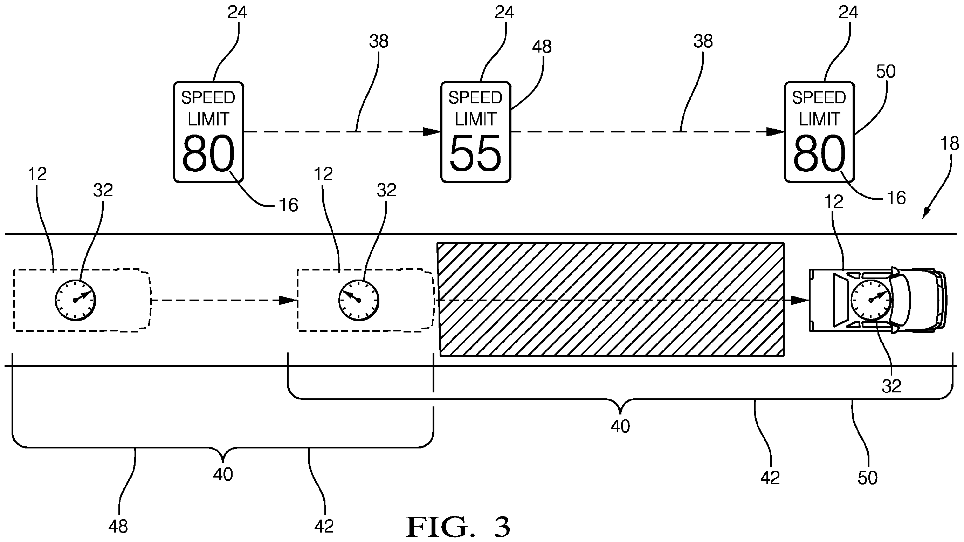

The controller 28 does not increment a count 46 of occurrences of the speed-change 40 when the speed-change 40 correlates (i.e. agrees, matches, trends, equates, etc.) with the change 38 of the speed-limit 16. That is, when the speed-change 40 of the host-vehicle 12 is detected to be trending in the same relative direction as the newly detected speed-limit 16, the controller 28 does not increment the count 46 of the occurrence of the speed-change 40. More specifically, the controller 28 may further determine when the change 38 of the speed-limit 16 indicates a reduction 48 in the speed-limit 16 and does not increment the count 46 of the speed-change 40 when the speed-change 40 indicates the reduction 48 in the speed 32 of the host-vehicle 12, and the reduction 48 in the speed-limit 16 is detected by the controller 28. Conversely, the controller 28 may further determine the change 38 of the speed-limit 16 indicates an increase 50 in the speed-limit 16 and does not increment the count 46 of the speed-change 40 when the speed-change 40 indicates an increase 50 in the speed 32 of the host-vehicle 12, and the increase 50 in the speed-limit 16 is detected by the controller 28 (see Fig. 3).

Returning to Fig. 1, the controller 28 activates the alert-device 34 when the count 46 of occurrences of the speed-change 40 exceeds a change-threshold 52 indicative of driver-fatigue. The change-threshold 52 may be user defined and is preferably be less than three occurrences of the speed-change 40 within a predefined time period. The controller 28 may preferably activate the alert-device 34 when the count 46 of the occurrences of the speed-change 40 exceeds the change-threshold 52 within a time period of less than thirty minutes, and when the variation-threshold 44 is less than twenty-five kilometers per hour (25 kph), and more preferably when the variation-threshold 44 is less than 10 kph.

Fig. 3 illustrates another traffic scenario where the host-vehicle 12 is entering another speed-zone where the speed-limit 16 is initially reduced for a distance along the roadway 18, followed by a return to the previous speed-limit 16. The controller 28 does not increment the count 46 of occurrences of the speed-change 40 when the speed-change 40 correlates (i.e. agrees, matches, trends, equates, etc.) with the change 38 of the speed-limit 16, as illustrated in Fig. 3.

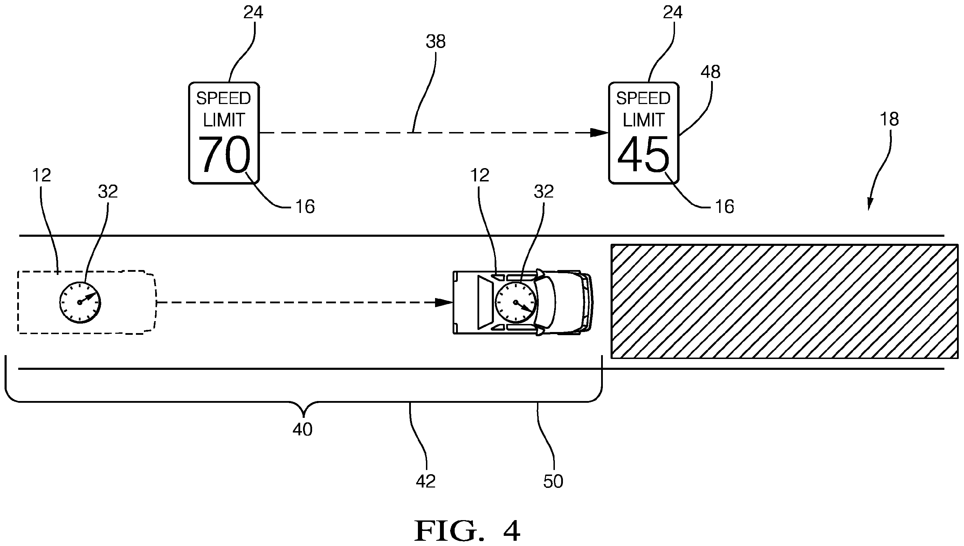

Fig. 4 illustrates yet another traffic scenario where the host-vehicle 12 is entering yet another speed-zone where the speed-limit 16 is reduced. In contrast to Figs. 2-3, the controller 28 does increment the count 46 of occurrences of the speed-change 40, as the speed-change 40 of the host-vehicle 12 does not correlate with the change 38 of the speed-limit 16. That is, the host-vehicle 12 is increasing in speed 32 when the speed-limit 16 is detected by the controller 28 to be the reduction 48 in the speed-limit 16.

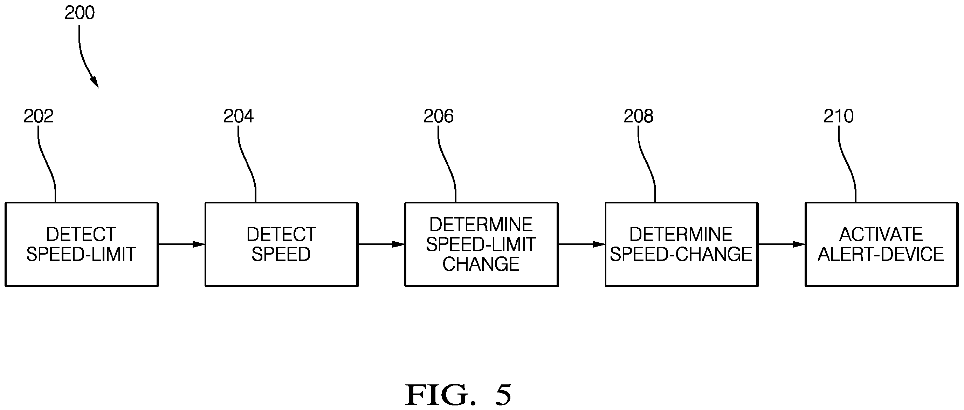

Fig. 5 illustrates a non-limiting example of another embodiment of a method 200 of operating a driver-fatigue warning system 10, hereafter referred to as the system 10, suitable for use on an automated vehicle 12, hereafter referred to as a host-vehicle 12.

Step 202, DETECT SPEED-LIMIT, may include the step of detecting, with a speed-limit-detection-means 14, a speed-limit 16 of a roadway 18 traveled by the host-vehicle 12. The speed-limit-detection-means 14 may be a camera 20 that renders an image 22 of a road-sign 24 proximate to the roadway 18. Examples of the camera 20 suitable for use on the host-vehicle 12 are commercially available as will be recognized by those in the art, one such being the APTINA MT9V023 from Micron Technology, Inc. of Boise, Idaho, USA. The camera 20 may be mounted on the front of the host-vehicle 12, or mounted in the interior of the host-vehicle 12 at a location suitable for the camera 20 to view the area around the host-vehicle 12 through the windshield of the host-vehicle 12. The camera 20 is preferably a video-type camera 20 or camera 20 that can capture images 22 of the roadway 18 and surrounding area at a sufficient frame-rate, of ten frames per second, for example.

The speed-limit-detection-means 14 may be a digital-map 26 that indicates the speed-limit 16 of the roadway 18. The digital-map 26 may be located on-board the host-vehicle 12 and may be integrated into a controller 28. The digital-map 26 may be stored `in the cloud' and accessed via a transceiver (e.g. Wi-Fi, cellular, satellite - not shown). The digital-map 26 and transceiver may also be part of a location-device (e.g. GPS - not shown).

Step 204, DETECT SPEED, may include the step of detecting, with a speed-sensor 30, a speed 32 of the host-vehicle 12. The speed-sensor 30 may include a wheel-speed-sensor (not shown) typically found on automotive applications. Other sensors capable of determining the speed 32 of the host-vehicle 12 may include, but are not limited to, a global-positioning-system (GPS) receiver (not shown), and a RADAR transceiver (not shown), and other devices as will be recognized by those skilled in the art.

Step 206, DETERMINE SPEED-LIMIT CHANGE, may include the step of determining, with a controller 28 in communication with the speed-limit-detection-means 14, the speed-sensor 30, and an alert-device 34, a change 38 of the speed-limit 16 of the roadway 18 based on the speed-limit-detection-means 14. The controller 28 may include a processor (not shown) such as a microprocessor or other control circuitry such as analog and/or digital control circuitry including an application specific integrated circuit (ASIC) for processing data as should be evident to those in the art. The controller 28 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of driver-fatigue exists based on signals received by the controller 28 from the speed-limit-detection-means 14 and the speed-sensor 30, as described herein.

The controller 28 may be configured to receive the image 22 from the camera 20 and detect characters (not specifically shown) on the road-sign 24 in order to determine the speed-limit 16. The controller 28 may use known optical-character-recognition (OCR) methods to match the characters in the image 22 captured by the camera 20 with the characters in a database (not specifically shown). One skilled in the art of OCR will recognize that methods such as optical-word-recognition (OWR), intelligent-character-recognition (ICR), and intelligent-word-recognition (IWR) are all considered OCR methods and may be applied by the controller 28 to determine the speed-limit 16. The OCR methods may include pre-processing of the image 22 to improve the success rate of recognition of the characters, matrix-matching, feature extraction, and application-specific optimizations, and will be recognized by those skilled in the art of OCR.

The controller 28 may also include an internet-transceiver (not shown) that updates the digital-map 26 with speed-limit 16 information. The internet-transceiver may be any internet-transceiver suitable for automotive applications and may include Wi-Fi, cellular, and satellite devices (not shown).

Step 208, DETERMINE SPEED-CHANGE, may include the step of determining, with the controller 28, that a speed-change 40 has occurred based on the speed-sensor 30 when a variation 42 in the speed 32 is greater than a variation-threshold 44. Fig. 2 illustrates a traffic scenario where the host-vehicle 12 is entering a construction-zone (not specifically shown) where the speed-limit 16 of the roadway 18 is reduced. The controller 28 determines the change 38 of the speed-limit 16 of the roadway 18 based on the speed-limit-detection-means 14 (i.e. based on the camera 20, the digital-map 26, or a combination thereof). The controller 28 also determines that a speed-change 40 has occurred based on the speed-sensor 30 when a variation 42 in the speed 32 of the host-vehicle 12 is greater than a variation-threshold 44 (Fig. 1).

The controller 28 does not increment a count 46 of occurrences of the speed-change 40 when the speed-change 40 correlates (i.e. agrees, matches, trends, equates, etc.) with the change 38 of the speed-limit 16. That is, when the speed-change 40 of the host-vehicle 12 is detected to be trending in the same relative direction as the newly detected speed-limit 16, the controller 28 does not increment the count 46 of the occurrence of the speed-change 40. More specifically, the controller 28 may further determine when the change 38 of the speed-limit 16 indicates a reduction 48 in the speed-limit 16 and does not increment the count 46 of the speed-change 40 when the speed-change 40 indicates the reduction 48 in the speed 32 of the host-vehicle 12, and the reduction 48 in the speed-limit 16 is detected by the controller 28. Conversely, the controller 28 may further determine the change 38 of the speed-limit 16 indicates an increase 50 in the speed-limit 16 and does not increment the count 46 of the speed-change 40 when the speed-change 40 indicates the increase 50 in the speed 32 of the host-vehicle 12, and the increase 50 in the speed-limit 16 is detected by the controller 28 (see Fig. 3).

Step 210, ACTIVATE ALERT-DEVICE, may include the step of activating, with the controller 28, the alert-device 34 when the count 46 of occurrences of the speed-change 40 exceeds a change-threshold 52 indicative of driver-fatigue. The alert-device 34 may be an indicator viewable by the operator 36 that is illuminated to indicate an instance of driver-fatigue, and/or an audible alarm, and/or a vibratory alarm that is activated to indicate the same.

Returning to Fig. 1, the controller 28 activates the alert-device 34 when the count 46 of occurrences of the speed-change 40 exceeds a change-threshold 52 indicative of driver-fatigue. The change-threshold 52 may be user defined and is preferably be less than three occurrences of the speed-change 40 within a predefined time period. The controller 28 may preferably activate the alert-device 34 when the count 46 of the occurrences of the speed-change 40 exceeds the change-threshold 52 within a time period of less than thirty minutes, and when the variation-threshold 44 is less than twenty-five kilometers per hour (25 kph), and more preferably when the variation-threshold 44 is less than 10 kph.

Fig. 3 illustrates another traffic scenario where the host-vehicle 12 is entering another speed-zone where the speed-limit 16 is initially reduced for a distance along the roadway 18, followed by a return to the previous speed-limit 16. The controller 28 does not increment the count 46 of occurrences of the speed-change 40 when the speed-change 40 correlates with the change 38 of the speed-limit 16, as illustrated in Fig. 3.

Fig. 4 illustrates yet another traffic scenario where the host-vehicle 12 is entering yet another speed-zone where the speed-limit 16 is reduced. In contrast to Figs. 2-3, the controller 28 does increment the count 46 of occurrences of the speed-change 40, as the speed-change 40 of the host-vehicle 12 does not correlate with the change 38 of the speed-limit 16. That is, the host-vehicle 12 is increasing in speed 32 when the speed-limit 16 is detected by the controller 28 to be the reduction 48 in the speed-limit 16.

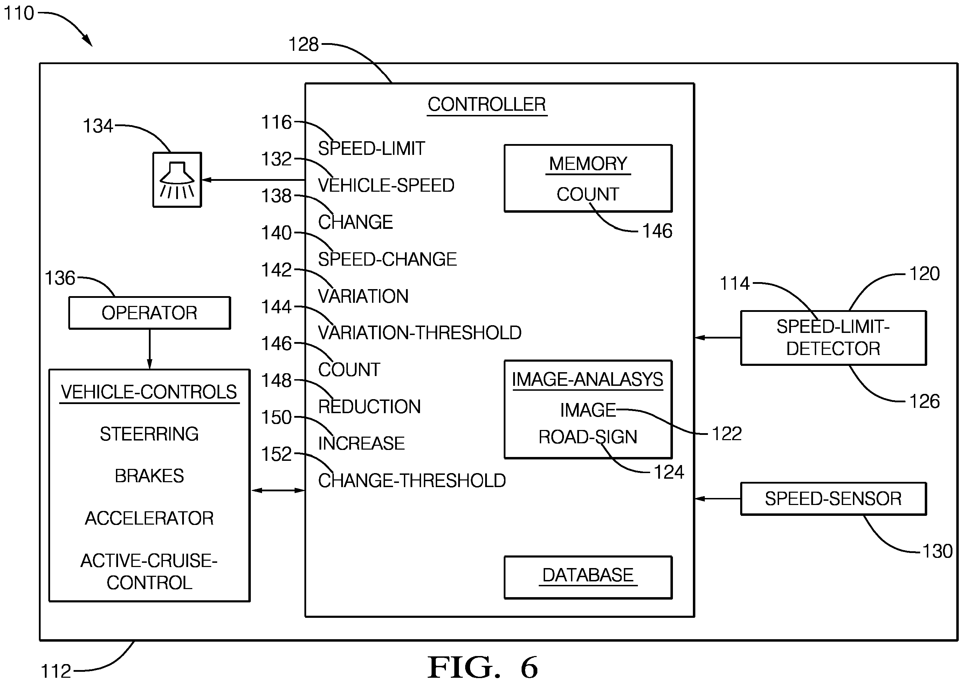

Fig. 6 illustrates a non-limiting example of yet another embodiment of an automated vehicular warning system 110, hereafter referred to as the system 110, suitable for use on an automated vehicle 112, hereafter referred to a host-vehicle 112. The system 110 includes a speed-limit-detector 114 that detects a speed-limit 116 of a roadway 118 traveled by the host-vehicle 112. The speed-limit-detector 114 may be a camera 120 that renders an image 122 of a road-sign 124 proximate to the roadway 118. Examples of the camera 120 suitable for use on the host-vehicle 112 are commercially available as will be recognized by those in the art, one such being the APTINA MT9V023 from Micron Technology, Inc. of Boise, Idaho, USA. The camera 120 may be mounted on the front of the host-vehicle 112, or mounted in the interior of the host-vehicle 112 at a location suitable for the camera 120 to view the area around the host-vehicle 112 through the windshield of the host-vehicle 112. The camera 120 is preferably a video-type camera 120 or camera 120 that can capture images 122 of the roadway 118 and surrounding area at a sufficient frame-rate, often frames per second, for example.

The speed-limit-detector 114 may be a digital-map 126 that indicates the speed-limit 116 of the roadway 118. The digital-map 126 may be located on-board the host-vehicle 112 and may be integrated into a controller 128. The digital-map 126 may be stored `in the cloud' and accessed via a transceiver (e.g. Wi-Fi, cellular, satellite - not shown). The digital-map 126 and transceiver may also be part of a location-device (e.g. GPS - not shown).

The system 110 also includes a speed-sensor 130 that detects a vehicle-speed 132 of the host-vehicle 112. The speed-sensor 130 may include a wheel-speed-sensor (not shown) typically found on automotive applications. Other sensors capable of determining the vehicle-speed 132 of the host-vehicle 112 may include, but are not limited to, a global-positioning-system (GPS) receiver (not shown), and a RADAR transceiver (not shown), and other devices as will be recognized by those skilled in the art.

The system 110 also includes an alert-device 134 operable to alert an operator 136 of the host-vehicle 112 of driver-fatigue. The alert-device 134 may be an indicator viewable by the operator 136 that is illuminated to indicate an instance of driver-fatigue, and/or an audible alarm, and/or a vibratory alarm that is activated to indicate the same.

The system 110 also includes the controller 128 in communication with the speed-limit-detector 114, the speed-sensor 130, and the alert-device 134. The controller 128 may include a processor (not shown) such as a microprocessor or other control circuitry such as analog and/or digital control circuitry including an application specific integrated circuit (ASIC) for processing data as should be evident to those in the art. The controller 128 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected instance of driver-fatigue exists based on signals received by the controller 128 from the speed-limit-detector 114 and the speed-sensor 130, as described herein.

The controller 128 may be configured to receive the image 122 from the camera 120 and detect characters (not specifically shown) on the road-sign 124 in order to determine the speed-limit 116. The controller 128 may use known optical-character-recognition (OCR) methods to match the characters in the image 122 captured by the camera 120 with the characters in a database (not specifically shown). One skilled in the art of OCR will recognize that methods such as optical-word-recognition (OWR), intelligent-character-recognition (ICR), and intelligent-word-recognition (IWR) are all considered OCR methods and may be applied by the controller 128 to determine the speed-limit 116. The OCR methods may include pre-processing of the image 122 to improve the success rate of recognition of the characters, matrix-matching, feature extraction, and application-specific optimizations, and will be recognized by those skilled in the art of OCR.

The controller 128 may also include an internet-transceiver (not shown) that updates the digital-map 126 with speed-limit 116 information. The internet-transceiver may be any internet-transceiver suitable for automotive applications and may include Wi-Fi, cellular, and satellite devices (not shown).

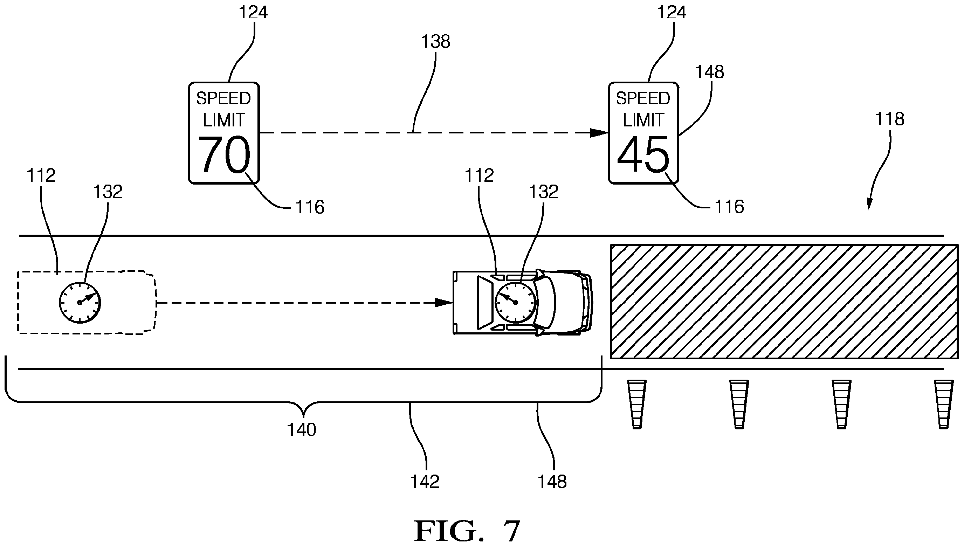

Fig. 7 illustrates a traffic scenario where the host-vehicle 112 is entering a construction-zone (not specifically shown) where the speed-limit 116 of the roadway 118 is reduced. The controller 128 determines a change 138 of the speed-limit 116 of the roadway 118 based on the speed-limit-detector 114 (i.e. based on the camera 120, the digital-map 126, or a combination thereof). The controller 128 also determines that a speed-change 140 has occurred based on the speed-sensor 130 when a variation 142 in the vehicle-speed 132 of the host-vehicle 112 is greater than a variation-threshold 144 (Fig. 6).

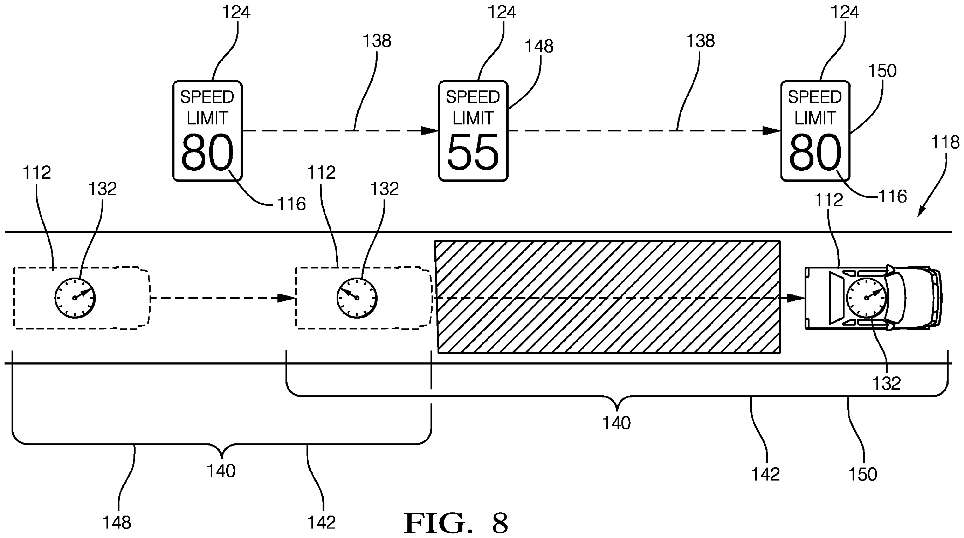

The controller 128 does not increment a count 146 of occurrences of the speed-change 140 when the speed-change 140 agrees (i.e. correlates, matches, trends, equates, etc.) with the change 138 of the speed-limit 116. That is, when the speed-change 140 of the host-vehicle 112 is detected to be trending in the same relative direction as the newly detected speed-limit 116, the controller 128 does not increment the count 146 of the occurrence of the speed-change 140. More specifically, the controller 128 may further determine when the change 138 of the speed-limit 116 indicates a reduction 148 in the speed-limit 116 and does not increment the count 146 of the speed-change 140 when the speed-change 140 indicates the reduction 148 in the vehicle-speed 132 of the host-vehicle 112, and the reduction 148 in the speed-limit 116 is detected by the controller 128. Conversely, the controller 128 may further determine the change 138 of the speed-limit 116 indicates an increase 150 in the speed-limit 16 and does not increment the count 146 of the speed-change 140 when the speed-change 140 indicates the increase 150 in the vehicle-speed 132 of the host-vehicle 112, and the increase 150 in the speed-limit 116 is detected by the controller 128 (see Fig. 8).

Returning to Fig. 6, the controller 128 activates the alert-device 134 when the count 146 of occurrences of the speed-change 140 exceeds a change-threshold 152 indicative of driver-fatigue. The change-threshold 152 may be user defined and is preferably be less than three occurrences of the speed-change 140 within a predefined time period. The controller 128 may preferably activate the alert-device 134 when the count 146 of the occurrences of the speed-change 140 exceeds the change-threshold 152 within a time period of less than thirty minutes, and when the variation-threshold 144 is less than twenty-five kilometers per hour (25 kph), and more preferably when the variation-threshold 144 is less than 10 kph.

Fig. 8 illustrates another traffic scenario where the host-vehicle 112 is entering another speed-zone where the speed-limit 116 is initially reduced for a distance along the roadway 118, followed by a return to the previous speed-limit 116. The controller 128 does not increment the count 146 of occurrences of the speed-change 140 when the speed-change 140 agrees with the change 138 of the speed-limit 116, as illustrated in Fig. 8.

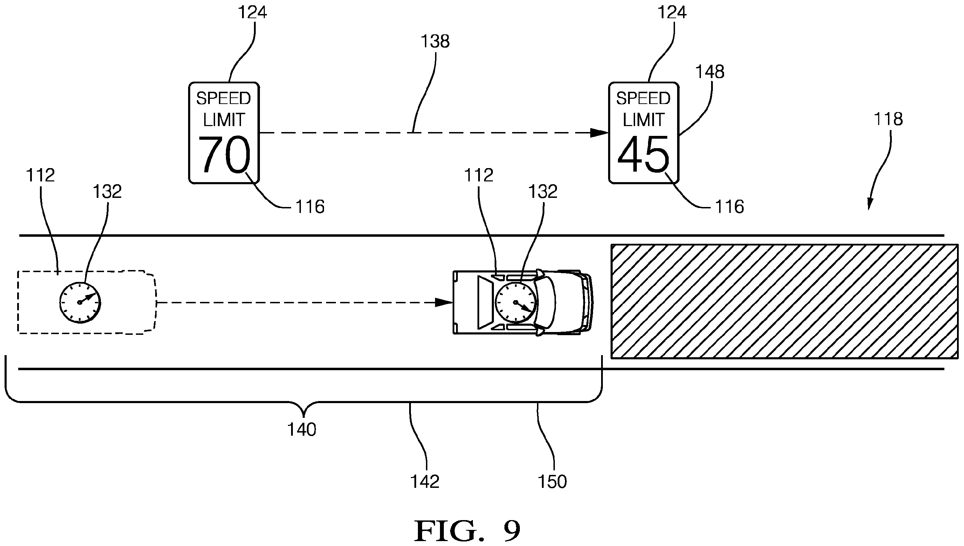

Fig. 9 illustrates yet another traffic scenario where the host-vehicle 112 is entering yet another speed-zone where the speed-limit 116 is reduced. In contrast to Figs. 7-8, the controller 128 does increment the count 146 of occurrences of the speed-change 140, as the speed-change 140 of the host-vehicle 112 does not correlate with the change 138 of the speed-limit 116. That is, the host-vehicle 112 is increasing in vehicle-speed 132 when the speed-limit 116 is detected by the controller 128 to be the reduction 148 in the speed-limit 16.

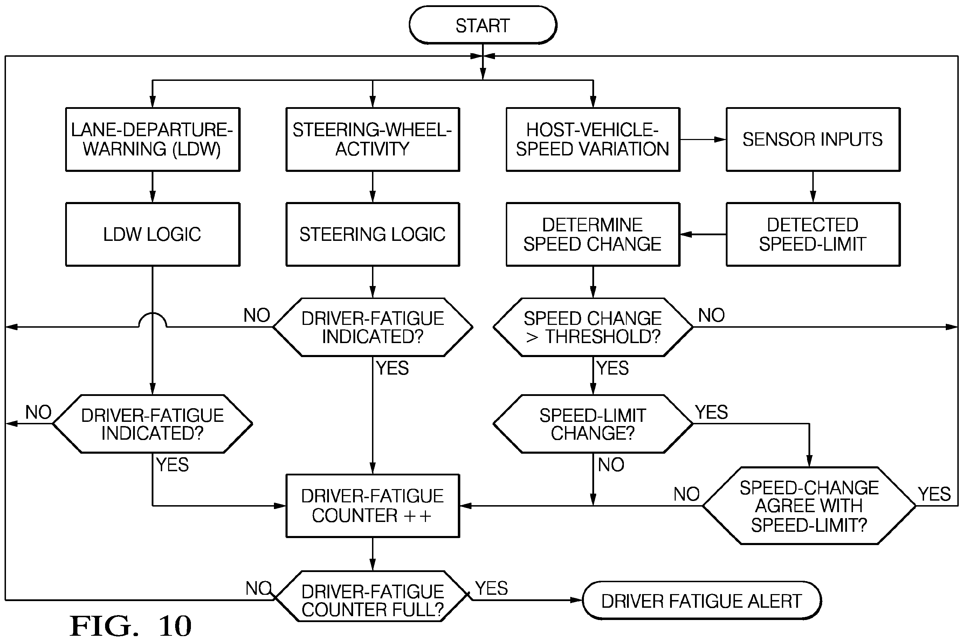

Fig. 10 illustrates a non-limiting example of the driver-fatigue algorithm that may be stored in the memory of the controller 28. The driver-fatigue algorithm may include logic that includes making decisions based on sensor input, lane-departure-warnings, steering-wheel-activity, and host-vehicle-speed.

Accordingly, a method 200 of operating a driver-fatigue warning system 10 is provided. The system 10 reduces the rates of the false driver-fatigue warning by determining when to count 46 the speed-change 40, which may help to reduce occurrences of operators 36 intentionally deactivating the driver-fatigue warning system 10. By not counting 46 the occurrences of the speed-change 40 under the conditions described above, the system 10 does not penalize the operator 36 of the host-vehicle 12 when the operator 36 makes an intentional speed-change 40. The operator 36 may make the intentional speed-change 40 to in observance of the traffic laws.

While this invention has been described in terms of the preferred embodiments thereof, it is not intended to be so limited, but rather only to the extent set forth in the claims that follow.

## Claims

1. A method (200) of operating a driver-fatigue warning system (10) suitable for use on
an automated vehicle, said method (200) comprising the steps of:
detecting (202), with a speed-limit-detection-means (14), a speed-limit (16) of a roadway (18) traveled by a host-vehicle (12);
detecting (204), with a speed-sensor (30), a speed (32) of the host-vehicle (12);
alerting (210), with an alert-device (34), an operator (36) of the host-vehicle (12) of driver-fatigue; and
determining (206), with a controller (28) in communication with the speed-limit-detection-means (14), the speed-sensor (30), and the alert-device (34), a change (38) of the speed-limit (16) of the roadway (18) based on the speed-limit-detection-means (14);
determining (208) that a speed-change (40) has occurred based on the speed-sensor (30) when a variation (42) in the speed (32) is greater than a variation-threshold (44);
not counting occurrences of the speed-change (40) when an increase or decrease in the speed (32) matches an increase or decrease in the speed-limit (16); and
counting occurrences of the speed-change (40) when the increase or decrease in the speed (32) does not match the increase or decrease in the speed-limit (16); and
activating (210) the alert-device (34) when a count (46) of occurrences of the speed-change (40) exceeds a change-threshold (52) indicative of driver-fatigue.

2. The method (200) in accordance with claim 1, further comprising:
determining, by the controller (28), when the change (38) of the speed-limit (16) indicates a reduction (48) in the speed-limit (16); and
not counting (46), by the controller (28), the speed-change (40) when the speed-change (40) indicates the reduction (48) in the speed (32) of the host-vehicle (12) and the reduction (48) in the speed-limit (16) is detected.

3. The method (200) according to any one of the claims 1 or 2, further comprising:
determining, by the controller (28), when the change (38) of the speed-limit (16) indicates an increase in the speed-limit (16); and
not counting (46), by the controller (28), the speed-change (40) when the speed-change (40) indicates an increase in the speed (32) of the host-vehicle (12) and an increase in the speed-limit (16) is detected.

4. The method (200) according to any one of the claims 1 to 3, further comprising:
activating (210), by the controller (28), the alert-device (34) when the count (46) of occurrences of the speed-change (40) exceeds a change-threshold (52) within a time period of less than thirty minutes.

5. The method (200) in accordance with claim 4, wherein the variation-threshold (44) is less than twenty-five kilometers per hour.

6. The method (200) in accordance with claim 5, wherein the variation-threshold (44) is less than ten kilometers per hour.

7. An automated vehicular warning system (110), said system comprising:
a speed-limit-detector (114);
a speed-sensor (130);
an alert-device (134); and
a controller (128) in communication with the speed-limit detector (114), the speed-sensor (130), and the alert-device (134), said controller (128) configured to:
determine a change (138) of a speed-limit (116) of a roadway (118);
determine a change (138) of a vehicle-speed (132);
not count (146) the change (138) of the vehicle-speed (132) when an increase or
decrease in the vehicle-speed (132) matches an increase or decrease in the speed-limit (116); and
count (146) occurrences of the change (138) of the vehicle-speed (132) when the increase or decrease in the vehicle-speed (132) does not match the increase or
decrease in the speed-limit (116); and
activate the alert-device (134) when the count (146) of the change (138) of vehicle-speed (132) exceeds a change-threshold (152) indicative of driver-fatigue.

8. The system (110) in accordance with claim 7, wherein the speed-limit-detector (114) includes a camera (120) that renders an image (122) of a road-sign (124) proximate to the roadway (118), and wherein the controller (128) is further configured to determine the change (138) of the speed-limit (116) of the roadway (118) based on the image (122).

9. The system (110) according to any one of claims 7 or 8, wherein the speed-limit-detector (114) includes a digital-map (126) that indicates the speed-limit (116) of the roadway (118), and wherein the controller (128) is further configured to determine the change (138) of the speed-limit (116) of the roadway (118) based on the digital-map (126).

10. The system (110) according to any one of claims 7 to 9, wherein the controller (128) is further configured to:
determine when the change (138) of the speed-limit (116) indicates a reduction (148) in the speed-limit (116); and
not increment the count (146) of the speed-change (140) when the speed-change (140) indicates the reduction (148) in the speed (132) of the host-vehicle (112), and the reduction (148) in the speed-limit (116) is detected.

11. The system (110) according to any one of claims 7 to 10, wherein the controller (128) is further configured to:
determine the change (138) of the speed-limit (116) indicates an increase in the speed-limit (116); and
not increment the count (146) of the speed-change (140) when the speed-change (140) indicates an increase in the speed (132) of the host-vehicle (112), and an increase in the speed-limit (116) is detected.

12. The system (110) according to any one of claims 7 to 11, wherein the controller (128) is further configured to activate the alert-device (134) when the count (146) of the occurrences of the speed-change (140) exceeds a change-threshold (152) within a time period of less than thirty minutes.

13. The system (110) in accordance with claim 12, wherein the variation-threshold (144) is less than twenty-five kilometers per hour.

14. The system (110) in accordance with claim 13, wherein the variation-threshold (144) is less than ten kilometers per hour.

## Patentansprüche

1. Verfahren (200) zum Betreiben eines Fahrermüdigkeits-Warnsystems (10), das zur Verwendung an einem automatisierten Fahrzeug geeignet ist, wobei das Verfahren (200) die Schritte umfasst, dass:
mit einem Geschwindigkeitsbegrenzungs-Detektionsmittel (14) eine Geschwindigkeitsbegrenzung (16) einer Straße (18), auf der ein Host-Fahrzeug (12) fährt, detektiert wird (202);
mit einem Geschwindigkeitssensor (30) eine Geschwindigkeit (32) des Host-Fahrzeugs (12) detektiert wird (204);
mit einer Alarmeinrichtung (34) ein Bediener (36) des Host-Fahrzeugs (12) hinsichtlich einer Fahrermüdigkeit alarmiert wird (210); und
mit einem Controller (28) in Verbindung mit dem Geschwindigkeitsbegrenzungs-Detektionsmittel (14), dem Geschwindigkeitssensor (30) und der Alarmeinrichtung (34) eine Änderung (38) der Geschwindigkeitsbegrenzung (16) der Straße (18) basierend auf dem Geschwindigkeitsbegrenzungs-Detektionsmittel (14) ermittelt wird (206);
basierend auf dem Geschwindigkeitssensor (30) ermittelt wird (208), dass eine Geschwindigkeitsänderung (40) stattgefunden hat, wenn eine Schwankung (42) der Geschwindigkeit (32) größer als ein Schwankungsschwellenwert (44) ist;
Vorkommnisse der Geschwindigkeitsänderung (40) nicht gezählt werden, wenn eine Erhöhung oder Verringerung der Geschwindigkeit (32) mit einer Erhöhung oder Verringerung der Geschwindigkeitsbegrenzung (16) übereinstimmt; und
Vorkommnisse der Geschwindigkeitsänderung (40) gezählt werden, wenn die Erhöhung oder Verringerung der Geschwindigkeit (32) nicht mit der Erhöhung oder Verringerung der Geschwindigkeitsbegrenzung (16) übereinstimmt; und
die Alarmeinrichtung (34) aktiviert wird (210), wenn ein Zählwert (46) von Vorkommnissen der Geschwindigkeitsänderung (40) einen Änderungsschwellenwert (52), der eine Fahrermüdigkeit angibt, übersteigt.

2. Verfahren (200) nach Anspruch 1, ferner umfassend, dass:
durch den Controller (28) ermittelt wird, wenn die Änderung (38) der Geschwindigkeitsbegrenzung (16) eine Reduzierung (48) der Geschwindigkeitsbegrenzung (16) angibt; und
die Geschwindigkeitsänderung (40) durch den Controller (28) nicht gezählt wird (46), wenn die Geschwindigkeitsänderung (40) die Reduzierung (48) der Geschwindigkeit (32) des Host-Fahrzeugs (12) angibt und die Reduzierung (48) der Geschwindigkeitsbegrenzung (16) detektiert wird.

3. Verfahren (200) nach einem der Ansprüche 1 oder 2, ferner umfassend, dass:
durch den Controller (28) ermittelt wird, wenn die Änderung (38) der Geschwindigkeitsbegrenzung (16) eine Erhöhung der Geschwindigkeitsbegrenzung (16) angibt; und
die Geschwindigkeitsänderung (40) durch den Controller (28) nicht gezählt wird (46), wenn die Geschwindigkeitsänderung (40) eine Erhöhung der Geschwindigkeit (32) des Host-Fahrzeugs (12) angibt und eine Erhöhung der Geschwindigkeitsbegrenzung (16) detektiert wird.

4. Verfahren (200) nach einem der Ansprüche 1 bis 3, ferner umfassend, dass:
die Alarmeinrichtung (34) durch den Controller (28) aktiviert wird (210), wenn der Zählwert (46) von Vorkommnissen der Geschwindigkeitsänderungen (40) innerhalb einer Zeitdauer, die kleiner als dreißig Minuten ist, einen Änderungsschwellenwert (52) übersteigt.

5. Verfahren (200) nach Anspruch 4, wobei der Schwankungsschwellenwert (44) kleiner als fünfundzwanzig Kilometer pro Stunde ist.

6. Verfahren (200) nach Anspruch 5, wobei der Schwankungsschwellenwert (44) kleiner als zehn Kilometer pro Stunde ist.

7. Automatisiertes Fahrzeugwarnsystem (110), wobei das System umfasst:
eine Geschwindigkeitsbegrenzungs-Detektionseinrichtung (114);
einen Geschwindigkeitssensor (130);
eine Alarmeinrichtung (134); und
einen Controller (128) in Verbindung mit der Geschwindigkeitsbegrenzungs-Detektionseinrichtung (114), dem Geschwindigkeitssensor (130) und der Alarmeinrichtung (134), wobei der Controller (128) ausgestaltet ist, um:
eine Änderung (138) einer Geschwindigkeitsbegrenzung (116) einer Straße (118) zu ermitteln;
eine Änderung (138) einer Fahrzeuggeschwindigkeit (132) zu ermitteln;
die Änderung (138) der Fahrzeuggeschwindigkeit (132) nicht zu zählen (146), wenn eine Erhöhung oder Verringerung der Fahrzeuggeschwindigkeit (132) mit einer Erhöhung oder Verringerung der Geschwindigkeitsbegrenzung (116) übereinstimmt; und
Vorkommnisse der Änderung (138) der Fahrzeuggeschwindigkeit (132) zu zählen (146), wenn die Erhöhung oder Verringerung der Fahrzeuggeschwindigkeit (132) nicht mit der Erhöhung oder Verringerung der Geschwindigkeitsbegrenzung (116) übereinstimmt; und
die Alarmeinrichtung (134) zu aktivieren, wenn der Zählwert (146) der Änderung (138) der Fahrzeuggeschwindigkeit (132) einen Änderungsschwellenwert (152), der eine Fahrermüdigkeit angibt, übersteigt.

8. System (110) nach Anspruch 7, wobei die Geschwindigkeitsbegrenzungs-Detektionseinrichtung (114) eine Kamera (120) umfasst, die ein Bild (122) eines Verkehrsschilds (124) in der Nähe der Straße (118) ausgibt, und wobei der Controller (128) ferner ausgestaltet ist, um die Änderung (138) der Geschwindigkeitsbegrenzung (116) der Straße (118) basierend auf dem Bild (122) zu ermitteln.

9. System (110) nach einem der Ansprüche 7 oder 8, wobei die Geschwindigkeitsbegrenzungs-Detektionseinrichtung (114) eine digitale Abbildung (126) umfasst, die die Geschwindigkeitsbegrenzung (116) der Straße (118) angibt, und wobei der Controller (128) ferner ausgestaltet ist, um die Änderung (138) der Geschwindigkeitsbegrenzung (116) der Straße (118) basierend auf der digitalen Abbildung (126) zu ermitteln.

10. System (110) nach einem der Ansprüche 7 bis 9, wobei der Controller (128) ferner ausgestaltet ist, um:
zu ermitteln, wenn die Änderung (138) der Geschwindigkeitsbegrenzung (116) eine Reduzierung (148) der Geschwindigkeitsbegrenzung (116) angibt; und
den Zählerwert (146) der Geschwindigkeitsänderung (140) nicht zu inkrementieren, wenn die Geschwindigkeitsänderung (140) die Reduzierung (148) der Geschwindigkeit (132) des Host-Fahrzeugs (112) angibt und die Reduzierung (148) der Geschwindigkeitsbegrenzung (116) detektiert wird.

11. System (110) nach einem der Ansprüche 7 bis 10, wobei der Controller (128) ferner ausgestaltet ist, um:
zu ermitteln, dass die Änderung (138) der Geschwindigkeitsbegrenzung (116) eine Erhöhung der Geschwindigkeitsbegrenzung (116) angibt; und
den Zählwert (146) der Geschwindigkeitsänderung (140) nicht zu inkrementieren, wenn die Geschwindigkeitsänderung (140) eine Erhöhung der Geschwindigkeit (132) des Host-Fahrzeugs (112) angibt und eine Erhöhung der Geschwindigkeitsbegrenzung (116) detektiert wird.

12. System (110) nach einem der Ansprüche 7 bis 11, wobei der Controller (128) ferner ausgestaltet ist, um die Alarmeinrichtung (134) zu aktivieren, wenn der Zählwert (146) der Vorkommnisse der Geschwindigkeitsänderung (140) innerhalb einer Zeitdauer, die kleiner als dreißig Minuten ist, einen Änderungsschwellenwert (152) übersteigt.

13. System (110) nach Anspruch 12, wobei der Schwankungsschwellenwert (144) kleiner als fünfundzwanzig Kilometer pro Stunde ist.

14. System (110) nach Anspruch 13, wobei der Schwankungsschwellenwert (144) kleiner als zehn Kilometer pro Stunde ist.

## Revendications

1. Procédé (200) pour faire fonctionner un système d'avertissement de fatigue du conducteur (10) utilisable sur un véhicule automatisé, ledit procédé (200) comprenant les étapes consistant à :
détecter (202), avec un moyen de détection de limite de vitesse (14), une limite de vitesse (16) d'une route (18) parcourue par un véhicule hôte (12) ;
détecter (204), avec un capteur de vitesse (30), une vitesse (32) du véhicule hôte (12) ;
alerter (210), avec un dispositif d'alerte (34), un opérateur (36) du véhicule hôte (12) de la fatigue du conducteur ; et
déterminer (206), avec un dispositif de commande (28) en communication avec le moyen de détection de limite de vitesse (14), le capteur de vitesse (30) et le dispositif d'alerte (34), un changement (38) de la limite de vitesse (16) de la route (18) sur la base du moyen de détection de limite de vitesse (14) ;
déterminer (208) qu'un changement de vitesse (40) s'est produit sur la base du capteur de vitesse (30) lorsqu'une variation (42) de la vitesse (32) est supérieure à un seuil de variation (44) ;
ne pas compter les occurrences du changement de vitesse (40) lorsqu'une augmentation ou une diminution de la vitesse (32) correspond à une augmentation ou une diminution de la limite de vitesse (16) ; et
compter les occurrences du changement de vitesse (40) lorsque l'augmentation ou la diminution de la vitesse (32) ne correspond pas à l'augmentation ou à la diminution de la limite de vitesse (16) ; et
activer (210) le dispositif d'alerte (34) lorsqu'un compte (46) d'occurrences du changement de vitesse (40) dépasse un seuil de changement (52) indiquant une fatigue du conducteur.

2. Procédé (200) selon la revendication 1, consistant en outre à :
déterminer, par le dispositif de commande (28), quand le changement (38) de la limite de vitesse (16) indique une réduction (48) de la limite de vitesse (16) ; et
ne pas compter (46), par le dispositif de commande (28), le changement de vitesse (40) lorsque le changement de vitesse (40) indique la réduction (48) de la vitesse (32) du véhicule hôte (12) et que la réduction (48) de la limite de vitesse (16) est détectée.

3. Procédé (200) selon l'une quelconque des revendications 1 ou 2, consistant en outre à :
déterminer, par le dispositif de commande (28), quand le changement (38) de la limite de vitesse (16) indique une augmentation de la limite de vitesse (16) ; et
ne pas compter (46), par le dispositif de commande (28), le changement de vitesse (40) lorsque le changement de vitesse (40) indique une augmentation de la vitesse (32) du véhicule hôte (12) et qu'une augmentation de la limite de vitesse (16) est détectée.

4. Procédé (200) selon l'une quelconque des revendications 1 à 3, consistant en outre à :
activer (210), par le dispositif de commande (28), le dispositif d'alerte (34) lorsque le compte (46) d'occurrences du changement de vitesse (40) dépasse un seuil de changement (52) dans un laps de temps inférieur à trente minutes.

5. Procédé (200) selon la revendication 4, dans lequel le seuil de variation (44) est inférieur à vingt-cinq kilomètres par heure.

6. Procédé (200) selon la revendication 5, dans lequel le seuil de variation (44) est inférieur à dix kilomètres par heure.

7. Système d'avertissement de véhicule automatisé (110), ledit système comprenant :
un détecteur de limite de vitesse (114) ;
un capteur de vitesse (130) ;
un dispositif d'alerte (134) ; et
un dispositif de commande (128) en communication avec le détecteur de limite de vitesse (114), le capteur de vitesse (130) et le dispositif d'alerte (134), ledit dispositif de commande (128) étant configuré pour :
déterminer un changement (138) d'une limite de vitesse (116) d'une route (118) ;
déterminer un changement (138) d'une vitesse de véhicule (132) ;
ne pas compter (146) le changement (138) de la vitesse de véhicule (132) lorsqu'une augmentation ou une diminution de la vitesse de véhicule (132) correspond à une augmentation ou une diminution de la limite de vitesse (116) ; et
compter (146) les occurrences du changement (138) de la vitesse de véhicule (132) lorsque l'augmentation ou la diminution de la vitesse de véhicule (132) ne correspond pas à l'augmentation ou à la diminution de la limite de vitesse (116) ; et
activer le dispositif d'alerte (134) lorsque le compte (146) du changement (138) de la vitesse de véhicule (132) dépasse un seuil de changement (152) indiquant une fatigue du conducteur.

8. Système (110) selon la revendication 7, dans lequel le détecteur de limite de vitesse (114) inclut une caméra (120) qui rend une image (122) d'un panneau routier (124) à proximité de la route (118) et dans lequel le dispositif de commande (128) est en outre configuré pour déterminer le changement (138) de la limite de vitesse (116) de la route (118) sur la base de l'image (122).

9. Système (110) selon l'une quelconque des revendications 7 ou 8, dans lequel le détecteur de limite de vitesse (114) inclut une carte numérique (126) qui indique la limite de vitesse (116) de la route (118) et dans lequel le dispositif de commande (128) est en outre configuré pour déterminer le changement (138) de la limite de vitesse (116) de la route (118) sur la base de la carte numérique (126).

10. Système (110) selon l'une quelconque des revendications 7 à 9, dans lequel le dispositif de commande (128) est en outre configuré pour :
déterminer quand le changement (138) de la limite de vitesse (116) indique une réduction (148) de la limite de vitesse (116) ; et
ne pas incrémenter le compte (146) du changement de vitesse (140) lorsque le changement de vitesse (140) indique la réduction (148) de la vitesse (132) du véhicule hôte (112) et que la réduction (148) de la limite de vitesse (116) est détectée.

11. Système (110) selon l'une quelconque des revendications 7 à 10, dans lequel le dispositif de commande (128) est en outre configuré pour :
déterminer que le changement (138) de la limite de vitesse (116) indique une augmentation de la limite de vitesse (116) ; et
ne pas incrémenter le compte (146) du changement de vitesse (140) lorsque le changement de vitesse (140) indique une augmentation de la vitesse (132) du véhicule hôte (112) et qu'une augmentation de la limite de vitesse (116) est détectée.

12. Système (110) selon l'une quelconque des revendications 7 à 11, dans lequel le dispositif de commande (128) est en outre configuré pour activer le dispositif d'alerte (134) lorsque le compte (146) des occurrences du changement de vitesse (140) dépasse un seuil de changement (152) dans un laps de temps inférieur à trente minutes.

13. Système (110) selon la revendication 12, dans lequel le seuil de variation (144) est inférieur à vingt-cinq kilomètres par heure.

14. Système (110) selon la revendication 13, dans lequel le seuil de variation (144) est inférieur à dix kilomètres par heure.
